# EUROPEAN PATENT SPECIFICATION

(11) **EP 3 531 066 B1**
(45) Date of publication and mention of the grant of the patent: **08.09.2021**
(21) Application number: 17862199.1
(22) Date of filing: 11.05.2017
(51) Int. Cl.: G01B 11/25, G01B 21/04, G06T 7/521, G06T 7/593, G06T 7/80, H04N 13/239, H04N 13/257, H04N 13/296, H04N 13/254, H04N 13/00

(54) **THREE-DIMENSIONAL SCANNING METHOD INCLUDING A PLURALITY OF LASERS WITH DIFFERENT WAVELENGTHS, AND SCANNER**
DREIDIMENSIONALES ABTASTVERFAHREN MIT EINER VIELZAHL VON LASERN MIT UNTERSCHIEDLICHEN WELLENLÄNGEN UND SCANNER
PROCÉDÉ DE BALAYAGE TRIDIMENSIONNEL FAISANT APPEL À PLUSIEURS LASERS À LONGUEURS D'ONDES DIFFÉRENTES, ET DISPOSITIF DE BALAYAGE

(30) Priority: 19.10.2016 CN 201610910273
(43) Date of publication of application: 28.08.2019
(73) Proprietor: SCANTECH (HANGZHOU) CO., LTD., Zhejiang Province (CN)
(72) Inventor: ZHENG, Jun, Hangzhou Zhejiang 311121 (CN); CHEN, Shangjian, Hangzhou Zhejiang 311121 (CN)
(74) Representative: Osha Liang
(86) International application number: PCT/CN2017/083918
(87) International publication number: WO 2018/072433

(56) References cited:
- WO-A1-2016/024026
- WO-A2-2011/163359
- CN-A- 101 853 528
- CN-A- 104 215 200
- CN-A- 106 500 627
- CN-A- 106 500 628
- CN-U- 205 505 996
- KR-B1- 100 910 573
- US-A1- 2016 073 091
- ZHANG: "A flexible new technique for camera calibration", IEEE TRANSACTIONS ON PATTERN ANALYSIS AND MACHINE INTELLIGENCE, vol. 22, no. 11, 1 November 2000 (2000-11-01), page 1330, XP055037019, USA ISSN: 0162-8828, DOI: 10.1109/34.888718

## Description

### TECHNICAL FIELD

The present invention relates to three-dimensional scanning technology, in particular to a three-dimensional scanning method and a scanner.

### BACKGROUND

In recent years, three-dimensional measuring instruments, such as handheld laser three-dimensional scanners and laser three-dimensional contour sensors, all use a combination of a laser and a camera to obtain three-dimensional data of a surface of an object based on triangulation. Such a measuring scheme is being increasingly widely used and has become one of the main measuring schemes in the field of high-precision three-dimensional measurement. It is widely used in machinery, automotive, aviation, sculpture, medical and other industries.

In the three-dimensional measuring method based on a laser and a camera, the commonly used laser wavebands include purple laser of 405 nm, blue laser of 450 nm, green laser of 532 nm, red laser of 650 nm, etc., and the influences of lasers with different wavebands on the three-dimensional scanning effect are also different. For example, the speckle phenomenon of red laser light is relatively obvious, which affects the accuracy of scanning, but red laser light is relatively stable and relatively safe to the human eye. In contrast, the speckle phenomenon of blue laser light is not obvious, so that cameras have a relatively high recognition accuracy for blue laser light and a better scanning result can be obtained. However, blue laser light is harmful to the human eye and an operator needs to wear a goggle, which limits its application in the three-dimensional scanning scenarios. Therefore, it is difficult to choose a suitable laser waveband that meets the needs of different three-dimensional scanning scenarios.

WO2016/024026 A1 describes an image acquisition unit for obtaining data to generate at least one three-dimensional representation of at least one underwater structure. The image acquisition unit includes a unit body, a plurality of cameras, a first laser light device, and a second laser light device. The first laser light device can operate based on a first illumination setting. The second laser light device can operate based a second illumination setting. The first and second cameras can be configured to capture light during the first illumination setting and generate a first set of data representative of the first laser projecting on the at least one underwater structure at a predetermined scan rate. The third and fourth cameras can be configured to capture light during the second illumination setting and generate a second set of data representative of the second laser projecting on the at least one underwater structure at the predetermined scan rate.

US 2016/073091 A1 describes a method for scanning and obtaining three-dimensional (3D) coordinates is provided. The method includes providing a 3D measuring device having a projector, a first camera and a second camera. The method records images of a light pattern emitted by the projector onto an object. A deviation in a measured parameter from an expected parameter is determined. The calibration of the 3D measuring device may be changed when the deviation is outside of a predetermined threshold.

WO 2011/163359 A1 describes systems and methods generating a 3D model of a surface of an object immersed in a transparent liquid within a stationary cylindrical transparent tank. First and second laser line projectors and a camera are rotated around a central axis of the cylindrical tank. The first and second laser line projectors each generate a laser line perpendicular to a plane or rotation and aligned with the center of rotation. The camera images the object. An image from the camera is captured at each of several angular positions of the camera relative to a reference position of the stationary cylindrical tank. The captured images are processed to determine, for each laser line within each image, a plurality of 3D positions where the laser line is incident upon a surface of the object. In embodiments, images are corrected with ray tracing or image warping and registration functions.

Zhang: "A flexible new technique for camera calibration", IEEE TRANSACTIONS ON PATTERN ANALYSIS AND MACHINE INTELLIGENCE, vol. 22, no. 11, 1 November 2000, page 1330, XP055037019, USA, ISSN: 0162-8828, DOI 10.1109/34.888718, describes a flexible technique for camera calibration, requiring the camera to observe a planar pattern shown at at least two different orientations, wherein either the camera or the planar pattern is freely moved.

### TECHNICAL PROBLEM TO BE SOLVED

In order to overcome the shortcomings of the existing handheld laser three-dimensional scanners with only a single wavelength, poor applicability, and high cost, the present invention provides a three-dimensional scanning method including a plurality of lasers with different wavelengths, which have multiple different wavelengths, good applicability, increased reusability of a single scanner, rendering it more cost effective.

### SOLUTION TO THE PROBLEM

### TECHNICAL SOLUTION

The technical solutions adopted by the present invention to solve the technical problem are a three-dimensional scanning method including a plurality of lasers with different wavelengths as defined by claim 1 and a scanner for implementing such a method as defined by claim 6.

The scanner that implements the three-dimensional scanning method comprises at least two cameras at fixed positions and at least two laser projectors, the at least two laser projectors corresponding to at least two different wavelengths, a spatial position relationship between the two cameras being calibrated and known. Trigger ends of the laser projectors and the cameras are connected to a synchronous trigger unit for selectively triggering one or more laser projectors of the same wavelength to operate in synchronization with the cameras. Further features of the three-dimensional scanner according to the invention are described below.

The three-dimensional scanning method is as follows.

Based on 2D patterns of laser contour lines projected onto a surface of a scanned object captured by the two cameras, respectively, two-dimensional lines at a highlight center are identified, and three-dimensional point cloud data is generated according to triangulation and epipolar constraint. Further features of the method according to the invention are described below.

Further, according to one embodiment, while capturing laser contour features of the surface of the scanned object, the two cameras identify intrinsic feature points of the surface of the scanned object in the field of view to obtain change information of the relative position; then, using the change information of position between a preceding frame and a subsequent, three-dimensional contour line point cloud data is obtained from consecutive frames of the scanner and spliced in a coordinate system to obtain complete three-dimensional contour point cloud data of the surface of the scanned object, thereby realizing continuous scanning.

Alternatively, by placing the scanned object on a pipeline or linear ramp with a position signal, or a rotating platform with an angle signal, change information of the relative position between the scanner and the scanned object is directly obtained; then, using the change information of position between a preceding frame and a subsequent frame, three-dimensional contour line point cloud data is obtained from consecutive frames of the scanner and spliced in a coordinate system to obtain complete three-dimensional contour point cloud data of the surface of the scanned object, thereby realizing continuous scanning.

Still further, the three-dimensional scanning method according to the invention comprises the following steps:
1) calibrating in advance camera internal parameters and distortion coefficients of the at least two cameras at different wavelengths;
2) calibrating in advance the position relationship between the two cameras;
3) before scanning, selecting a laser projector with a corresponding waveband for scanning according to requirements of field accuracy and scanning plane dimensions; selecting calibrated internal parameters and distortion coefficients of the at least two cameras at the selected wavelength according to configurations; and outputting, to a 2D image laser contour line extractor and a 3D constructor, the selected internal parameters and distortion coefficients of the at least two cameras.
4) When scanning, synchronously inputting the laser contour images of the surface of the object captured by the at least two cameras to the 2D image laser contour line extractor; respectively correcting distortion of the two images according to the internal parameters and distortion coefficients of the at least two cameras at the currently selected waveband; respectively extracting connected regions of line contours from the corrected images according to grayscale differences between pixels; calculating to respectively obtain the two-dimensional line sets at the highlight centers at sub-pixel level according to grayscale gravity centers in the connected regions; outputting the two-dimensional line sets to the 3D constructor; generating, by the 3D constructor, the three-dimensional contour point cloud data based on principles of epipolar constraint according to the selected internal parameters, distortion coefficients and position relationship of the at least two cameras at the currently selected waveband; and outputting the three-dimensional contour point cloud data.

According to one embodiment, in Step 1), the calibration method of the cameras is the Zhengyou Zhang calibration method to obtain focal lengths, center offsets, radial distortion coefficients and tangential distortion coefficients of the cameras.

According to one embodiment, in Step 2), the calibration method is the stereo calibration method.

According to the invention, the three-dimensional scanner for implementing the above-mentioned three-dimensional scanning method includes a plurality of lasers with different wavelengths. The three-dimensional scanner comprises at least two laser projectors, at least two cameras for capturing laser patterns projected onto a surface of a detected object, and a computing processing unit connected to the cameras for image recognition and three-dimensional reconstruction; the at least two laser projectors correspond to at least two different wavelengths and are disposed at fixed positions; a spatial position relationship between the two cameras is calibrated and known; output ends of the at least two cameras are connected to the computing processing unit; the computing processing unit comprises a 2D image laser contour line extractor, a 3D constructor, and a waveband switching determiner that selects calibrated internal parameters and distortion coefficients of the at least two cameras at the wavelength selected among the one of the at least two different wavelengths;
the output ends of the at least two cameras are connected to the 2D image laser contour line extractor, the 2D image laser contour line extractor is connected to the 3D constructor, and the waveband switching determiner is connected to the 2D image laser contour line extractor and the 3D constructor;
and wherein trigger ends of the laser projectors and the cameras are connectable to a synchronous trigger unit for selectively triggering one or more laser projectors of the same wavelength to operate in synchronization with the cameras.

According to one embodiment, multi-bandpass filters are mounted on the cameras, and passbands of the filters correspond to the at least two wavelengths of the at least two laser projectors.

According to one embodiment , the at least two laser projectors of different wavelengths comprise a laser projector of a blue waveband and a laser projector of a red waveband.

The technical considerations of the present invention are: a laser having a shorter wavelength and a laser having a longer wavelength are simultaneously mounted on a scanner. Since light beams of different wavelengths differ in their refractive indices when passing through two media, a camera with a fixed focal length and aperture has different focal points for light beams of different wavelengths. The focal point in a situation where an object that reflects light of a shorter wavelength is captured is closer to the camera than that in a situation where an object that reflects light of a longer wavelength is captured. Taking red and blue wavebands for example, in order to obtain the correct focus, a blue object should be closer to the camera than a red object. When the resolution of the camera is the same, capturing a closer object means that a smaller part is projected on the same area of the photosensitive component. In other words, the captured plane dimension of the blue object is smaller with a higher resolution, while the captured plane dimension of the red object is larger with a lower resolution. In addition, since laser light is monochromatic, interference occurs when it is reflected on the surface of the object, such that unevenly distributed granular spots (i.e., laser scattered spots) appear on the laser contour lines of the surface of the object captured by the camera. When using a laser with a shorter wavelength, the speckle phenomenon is weaker than when using a laser with a longer wavelength, and the laser contour lines of the surface of the object captured by the camera is sharper, which is more favorable for obtaining the details of the surface of the object.

### BENEFICIAL EFFECTS OF THE INVENTION

The beneficial effects of the present invention are mainly as follows: compared with a conventional three-dimensional scanner having a laser with only a single wavelength, the present invention can be applied to both high-precision and normal three-dimensional scanning scenarios with high efficiency and safety, which greatly increases the reusability of a single scanner, rendering it more cost effective.

### BRIEF DESCRIPTION OF DRAWINGS

Fig. 1 is a schematic diagram of a three-dimensional scanner including a plurality of lasers with different wavelengths.
Fig. 2 is a schematic diagram of the working principle of a synchronous trigger unit.
Fig. 3 is a schematic diagram of a computing processing unit. BEST EMBODIMENTS OF THE INVENTION
Next, the present invention is further described in reference to the drawings.

### Example 1

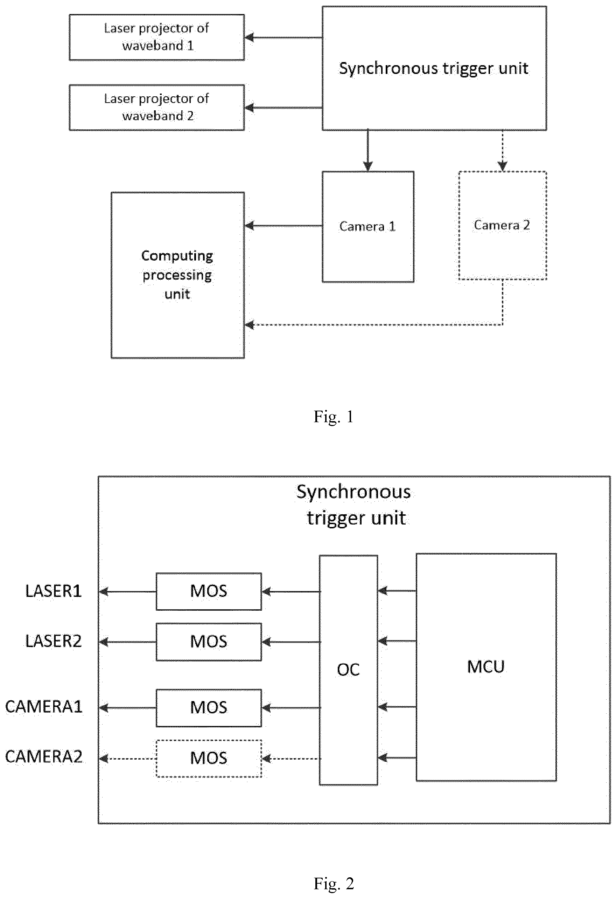

Referring to Figs. 1 to 3, a three-dimensional scanning method including a plurality of lasers with different wavelengths, a scanner that implements the three-dimensional scanning method comprising at least two cameras at fixed positions and at least two laser projectors, the at least two laser projectors corresponding to at least two different wavelengths, a spatial position relationship between the two cameras being calibrated and known; the three-dimensional scanning method is as follows:

Based on 2D patterns of laser contour lines projected onto a surface of a scanned object captured by the two cameras, respectively, two-dimensional lines at a highlight center are identified, and three-dimensional point cloud data is generated according to triangulation and epipolar constraint.

Further, while capturing laser contour features of the surface of the scanned object, the two cameras identify intrinsic feature points of the surface of the scanned object in the field of view to obtain change information of the relative position; then, using the change information of position between a preceding frame and a subsequent, three-dimensional contour line point cloud data is obtained from consecutive frames of the scanner and spliced in a coordinate system to obtain complete three-dimensional contour point cloud data of the surface of the scanned object, thereby realizing continuous scanning.

Alternatively, by placing the scanned object on a pipeline or linear ramp with a position signal, or a rotating platform with an angle signal, change information of the relative position between the scanner and the scanned object is directly obtained; then, using the change information of position between a preceding frame and a subsequent frame, three-dimensional contour line point cloud data is obtained from consecutive frames of the scanner and spliced in a coordinate system to obtain complete three-dimensional contour point cloud data of the surface of the scanned object, thereby realizing continuous scanning.

Still further, the three-dimensional scanning method comprises the following steps:
1) calibrating in advance camera internal parameters and distortion coefficients of the at least two cameras at different wavelengths;
2) calibrating in advance the position relationship between the two cameras;
3) before scanning, selecting a laser projector with a corresponding waveband for scanning according to requirements of field accuracy and scanning plane dimensions; selecting calibrated internal parameters and distortion coefficients of the at least two cameras at the selected wavelength according to configurations; and outputting, to a 2D image laser contour line extractor and a 3D constructor, the selected internal parameters and distortion coefficients of the at least two cameras.
4) when scanning, synchronously inputting the laser contour images of the surface of the object captured by the at least two cameras to the 2D image laser contour line extractor; respectively correcting distortion of the two images according to the internal parameters and distortion coefficients of the at least two cameras at the currently selected waveband; respectively extracting connected regions of line contours from the corrected images according to grayscale differences between pixels; calculating to respectively obtain the two-dimensional line sets at the highlight centers at sub-pixel level according to grayscale gravity centers in the connected regions; outputting the two-dimensional line sets to the 3D constructor; generating, by the 3D constructor, the three-dimensional contour point cloud data based on principles of epipolar constraint according to the selected internal parameters, distortion coefficients and position relationship of the at least two cameras at the currently selected waveband; and outputting the three-dimensional contour point cloud data.

In Step 1), the calibration method of the cameras is the Zhengyou Zhang calibration method to obtain focal lengths, center offsets, radial distortion coefficients and tangential distortion coefficients of the cameras.

In Step 2), the calibration method is the stereo calibration method.

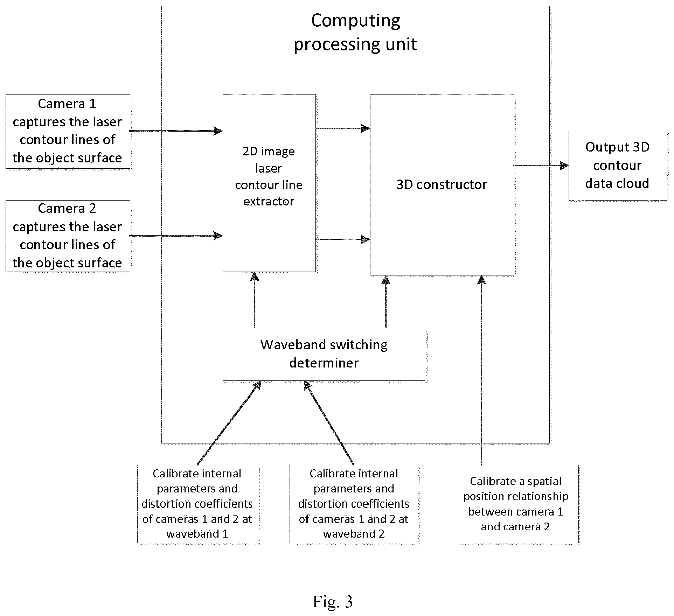

The principle of this embodiment is described in detailed by taking an example that uses two cameras, a linear laser projector of a red waveband, and a linear laser projector of a blue waveband. As shown in Fig. 1, laser projector P1 of waveband 1 is a red linear laser projector, and laser projector P2 of waveband 2 is a blue linear laser projector. A synchronous trigger unit is connected to external trigger interfaces of the two cameras and drive control interfaces of the two laser projectors and synchronously triggers the cameras and the laser projector of the current working waveband. An image captured by the cameras in real time is sent to the computing processing unit for three-dimensional reconstruction of stereoscopic vision, and the final three-dimensional contour point cloud data is generated and outputted. The detailed implementation is shown in Fig. 3, and the steps are as follows:
Step 1. The camera internal parameters and distortion coefficients of camera C1 and camera C2 at wavelength 1 and wavelength 2 respectively (wavelength 1 and wavelength 2 being the wavelengths of laser projector P1 and laser projector P2, respectively) are calibrated in advance and stored in the computing processing unit of the system. The calibration method of the cameras can be the currently widely used Zhengyou Zhang calibration method to obtain the focal lengths, center offsets and coefficients of radial distortion and tangential distortion of the cameras.
Step 2. A position relationship between the two cameras is calibrated in advance. The calibration method can be the common stereo calibration method, and the calibration result is stored in a 3D constructor.
Step3. Before scanning, a red waveband or blue waveband may be selected for scanning according to requirements of field accuracy and scanning plane dimensions, and the selection result is stored in a waveband switching determiner. The waveband switching determiner selects the calibrated internal parameters and distortion coefficients of the two cameras at a corresponding wavelength according to configurations and the selected internal parameters and distortion coefficients of the two cameras are outputted to a 2D image laser contour line extractor and the 3D constructor.
Step 4. When scanning, camera C1 and camera C2 synchronously input captured laser contour image Im1 of the surface of the object and laser contour image Im2 of the surface of the object to the 2D image laser contour line extractor of the computing processing unit. Distortion of the two images is respectively corrected according to the internal parameters and distortion coefficients of camera C1 and camera C2 at the current waveband selected by the waveband switching determiner. Connected regions of line contours are extracted from the corrected images, respectively, according to grayscale differences between pixels. Calculation is performed according to grayscale gravity centers in the connected regions to obtain two-dimensional line set L1 and two-dimensional line set L2 at highlight centers at sub-pixel level, respectively, and two-dimensional line set L1 and two-dimensional line set L2 are outputted to the 3D constructor. By the 3D constructor, three-dimensional contour point cloud data is obtained based on principles of epipolar constraint according to the internal parameters, distortion coefficients selected by the waveband switching determiner at the selected waveband and the position relationship of cameras C1 and C2, and the three-dimensional contour point cloud data is outputted.

### Example 2

Referring to Figs. 1 to 3, a three-dimensional scanner including a plurality of lasers with different wavelengths, the three-dimensional scanner comprising at least two laser projectors, at least two cameras for capturing laser patterns projected onto a surface of a detected object, and a computing processing unit connected to the cameras for image recognition and three-dimensional reconstruction; the at least two laser projectors correspond to at least two different wavelengths and are disposed at fixed positions; a spatial position relationship between the two cameras is calibrated and known; output ends of the at least two cameras are connected to the computing processing unit; the computing processing unit comprises a 2D image laser contour line extractor, a 3D constructor, and a waveband switching determiner that selects calibrated internal parameters and distortion coefficients of the at least two cameras at a selected wavelength; the output ends of the at least two cameras are connected to the 2D image laser contour line extractor, the 2D image laser contour line extractor is connected to the 3D constructor, and the waveband switching determiner is connected to the 2D image laser contour line extractor and the 3D constructor.

Further, trigger ends of the laser projectors and the cameras are connected to a synchronous trigger unit for selectively triggering one or more laser projectors of the same wavelength to operate in synchronization with the cameras.

Still further, multi-bandpass filters are mounted on the cameras, and passbands of the filters correspond to the at least two wavelengths of the at least two laser projectors.

Yet still further, the at least two laser projectors of different wavelengths comprise a laser projector of a blue waveband and a laser projector of a red waveband.

The system and principle of the present invention will be described by taking a 3D scanner equipped with a linear laser projector of a red waveband and a linear laser projector of a blue waveband for example. The working principle of the present invention is illustrated by Fig. 1. Laser projector P1 of waveband 1 is a red linear laser projector, and laser projector P2 of waveband 2 is a blue linear laser projector. The synchronous trigger unit is connected to external trigger interfaces of the two cameras and drive control interfaces of the two laser projectors, and synchronously triggers the two cameras and one laser projector at the current working waveband. Images captured by the cameras in real time are sent to the computing processing unit for three-dimensional reconstruction of stereoscopic vision, and final three-dimensional contour point cloud data is generated and outputted.

Within the synchronous trigger unit, an operation rhythm can be controlled by a micro control unit MCU, and a synchronization control signal is outputted to power devices MOS through an isolation device OC so as to ultimately control the synchronization of the laser projector LASER PI/LASER P2 and the camera CAMERA. The firmware of the MCU determines whether to trigger red waveband LASER 1 or blue waveband LASER 2 to work synchronously with CAMERA C1 (and CAMERA C2) according to the user's selection.

Of course, if continuous scanning is performed, the MCU cyclically triggers the lasers and the cameras according to a set frame rate. The captured images are continuously inputted to the computing processing unit for three-dimensional reconstruction of three-dimensional stereoscopic vision, and three-dimensional point cloud data is continuously output.

## Claims

1. A three-dimensional scanning method including a plurality of laser projectors with lasers with different wavelengths (1, 2), wherein a scanner that implements the three-dimensional scanning method comprises at least two fixed cameras (C1, C2) and at least two laser projectors (PI, P2), the at least two laser projectors corresponding to at least two different wavelengths (1, 2), a spatial position relationship between the two cameras being calibrated and known, trigger ends of the laser projectors and the cameras being connected to a synchronous trigger unit for selectively triggering one or more laser projectors of the same wavelength to operate in synchronization with the cameras, the three-dimensional scanning method comprising:
identifying and obtaining two-dimensional line sets at highlight centers according to 2D patterns of laser contour lines projected onto a surface of a scanned object captured by the two cameras, respectively;
generating, according to triangulation and epipolar constraint, spatial three-dimensional point cloud data,
the three-dimensional scanning method further comprising the following steps:
1) calibrating in advance camera internal parameters and distortion coefficients of the at least two cameras at different wavelengths (1,2), respectively;
2) respectively calibrating in advance a position relationship between the two cameras;
3) before scanning,
selecting a laser projector of a corresponding waveband for scanning according to requirements of field accuracy and scanning plane dimensions;
selecting, according to configurations, the calibrated internal parameters and distortion coefficients of the at least two cameras at the corresponding wavelength (1,2); and
outputting, to a 2D image laser contour line extractor and a 3D constructor, the selected internal parameters and distortion coefficients of the at least two cameras;
4) when scanning,
synchronously inputting, by the at least two cameras, to the 2D image laser contour extractor, the captured laser contour images of the surface of the object;
respectively correcting, according to the selected internal parameters and distortion coefficients of the at least two cameras at the current waveband, distortion of the two images;
respectively extracting connected regions of line contours from the corrected images according to grayscale differences between pixels;
calculating to obtain respectively the 2D line sets at the highlight centers at sub-pixel level according to grayscale gravity centers in the connected regions;
outputting the 2D line sets to the 3D constructor;
obtaining, by the 3D constructor, the 3D contour point cloud data based on principles of epipolar constraint according to the selected internal parameters, distortion coefficients and position relationship of the two cameras at the current wavelength (1, 2); and
outputting the 3D contour point cloud data.

2. The three-dimensional scanning method including a plurality of laser projectors with lasers with different wavelengths according to claim 1, wherein the method further comprises:
identifying, by the two cameras, intrinsic feature points on the surface of the scanned object in a field of view while capturing laser contour features of the surface of the scanned object, so as to obtain change information of relative position;
splicing, using the change information of relative position between a preceding frame and a subsequent frame, three-dimensional contour line point cloud data obtained from consecutive frames of the scanner in a coordinate system;
obtaining complete three-dimensional contour point cloud data of the surface of the scanned object, thereby realizing continuous scanning.

3. The three-dimensional scanning method including a plurality of laser projectors with lasers with different wavelengths according to claim 1, wherein the method further comprises:
directly obtaining, by using a pipeline or linear slider with a position signal, or a rotating platform with an angle signal, the change information of relative position between the scanner and the scanned object;
splicing, by using the change information of position between the preceding frame and the subsequent frame captured by the cameras, three-dimensional contour line point cloud data obtained from the consecutive frames of the scanner in a coordinate system;
obtaining complete three-dimensional contour point cloud data of the surface of the scanned object, thereby realizing continuous scanning.

4. The three-dimensional scanning method including a plurality of laser projetors with lasers with different wavelengths according to claim 1, wherein in the step 1), the calibration method of the cameras is Zhengyou Zhang calibration method to obtain focal lengths, center offsets, and coefficients of radial distortion and tangential distortion of the cameras.

5. The three-dimensional scanning method including a plurality of laser projectors with lasers with different wavelengths according to claim 1, wherein in the step 2), the calibration method is the stereo calibration method.

6. A scanner for implementing the three-dimensional scanning method including a plurality of laser projectors with lasers with different wavelengths according to claim 1, wherein the scanner comprises at least two laser projectors (P1, P2), at least two cameras (C1, C2) for capturing laser patterns projected onto a surface of a scanned object, and a computing processing unit connected to the cameras for image recognition and three-dimensional reconstruction;
the at least two laser projectors correspond to at least two different wavelengths (1,2) and have fixed positions;
a spatial position relationship between the two cameras is calibrated and known;
output ends of the at least two cameras are connected to the computing processing unit;
the computing processing unit comprises a 2D image laser contour line extractor, a 3D constructor, and a waveband switching determiner that selects the calibrated internal parameters and distortion coefficients of the at least two cameras at the wavelength (1 or 2) selected among the one of the at least two different wavelengths;
the output ends of the at least two cameras are connected to the 2D image laser contour line extractor, the 2D image laser contour line extractor is connected to the 3D constructor, the waveband switching determiner is connected to the 2D image laser contour line extractor and the 3D constructor;
and wherein the scanner comprises a synchronous trigger unit configured to selectively trigger one or more laser projectors of the same wavelength to operate in synchronization with the cameras, wherein the trigger ends of the laser projectors and the cameras are connected to said synchronous trigger.

7. The scanner according to claim 6, wherein multi-bandpass filters are mounted on the cameras, and passbands of the filters correspond to the at least two wavelengths of the at least two laser projectors.

8. The scanner according to claim 6, wherein the at least two laser projectors of different wavelengths comprise a laser projector of a blue waveband and a laser projector of a red waveband.

## Patentansprüche

1. Dreidimensionales Scan-Verfahren, das eine Mehrzahl von Laser-Projektoren mit Lasern unterschiedlicher Wellenlängen (1, 2) aufweist,
wobei ein Scanner, der das dreidimensionale Scan-Verfahren durchführt, wenigstens zwei stationäre Kameras (C1, C2) und wenigstens zwei Laser-Projektoren (P1, P2) aufweist,
wobei die wenigstens zwei Laser-Projektoren den wenigstens zwei unterschiedlichen Wellenglängen (1, 2) entsprechen,
wobei eine räumliche Lagebeziehung zwischen den zwei Kameras kalibriert und bekannt ist, wobei Trigger-Enden der Laser-Projektoren und der Kameras mit einer Synchron-Trigger-Einheit verbunden sind zum wahlweisen Auslösen eines oder mehrerer Laser-Projektoren mit gleicher Wellenlänge für einen Synchronbetrieb mit den Kameras, wobei das dreidimensionale Scan-Verfahren aufweist:
Identifizieren und Erfassen von zweidimensionalen Liniensätzen an Highlight-Zentren gemäß 2D-Mustern von Laserkonturlinien, die jeweils auf eine Oberfläche eines von den zwei Kameras aufgenommenen gescannten Objekts projiziert werden;
Erzeugen räumlicher dreidimensionaler Punktwolkendaten gemäß Triangulation und epipolarer Beschränkung,
wobei das dreidimensionale Scan-Verfahren des Weiteren die folgenden Schritte aufweist:
1) Vorab-Kalibrieren kamerainterner Parameter und Verzeichnungskoeffizienten der wenigstens zwei Kameras bei unterschiedlichen Wellenlängen (1, 2);
2) Vorab-Kalibrieren einer Lagebeziehung zwischen den zwei Kameras;
3) Auswählen eines Laser-Projektors eines entsprechenden Wellenbereichs für ein Scannen gemäß den Anforderungen an die Feldgenauigkeit und Scan-Ebene-Abmessungen vor dem Scannenje nach Konfiguration;
Auswählen der kalibrierten internen Parameter und Verzeichnungskoeffizienten der mindestens zwei Kameras bei der entsprechenden Wellenlänge (1, 2) je nach Konfiguration; und
Ausgeben der ausgewählten internen Parameter und Verzeichnungskoeffizienten der mindestens zwei Kameras an einen 2D-Bildlaser-Konturlinienextraktor und einen 3D-Konstruktor;
4) beim Scannen,
synchrones Eingeben der erfassten Laserkonturbilder der Oberfläche des Objekts durch die mindestens zwei Kameras in den 2D-Bild-Laserkonturextraktor;
Korrektur der Verzeichnung der beiden Bilder anhand der gewählten internen Parameter und Verzeichnungskoeffizienten der mindestens zwei Kameras im aktuellen Wellenbereich;
Extrahieren von zusammenhängenden Bereichen von Linienkonturen aus den korrigierten Bildern entsprechend den Graustufenunterschieden zwischen Pixeln;
Berechnen, um jeweils die 2D-Liniensätze an den Highlight-Zentren auf Sub-Pixel-Ebene entsprechend den Graustufen-Schwerpunkten in den zusammenhängenden Bereichen zu erhalten;
Ausgeben der 2D-Liniensätze an den 3D-Konstruktor;
Erhalten der 3D-Konturpunktwolkendaten durch den 3D-Konstruktor, basierend auf den Prinzipien der epipolaren Beschränkung gemäß den ausgewählten internen Parametern, Verzerrungskoeffizienten und der Lagebeziehung der beiden Kameras bei der aktuellen Wellenlänge (1, 2); und
Ausgeben der 3D-Konturpunktwolkendaten.

2. Dreidimensionales Scan-Verfahren, das eine Mehrzahl von Laser-Projektoren mit Lasern unterschiedlicher Wellenlängen (1, 2) aufweist, gemäß Anspruch 1, wobei das Verfahren des Weiteren aufweist:
Identifizieren von Eigenmerkmalspunkten auf der Oberfläche des gescannten Objects in einem Sichtfeld durch die beiden Kameras während die Laserkonturmerkmale der Oberfläche des gescannten Objekts erfasst werden, um so Änderungsinformationen der relativen Position zu erhalten;
Spleißen von dreidimensionalen Konturlinienpunktwolkendaten, die aus aufeinanderfolgenden Frames des Scanners in einem Koordinatensystem erhalten wurden, unter Verwendung der Änderungsinformation der relativen Position zwischen einem vorhergehenden Frame und einem darauffolgenden Frame;
Erhalten vollständiger dreidimensionaler Konturpunktwolkendaten der Oberfläche des gescannten Objekts, wodurch ein kontinuierliches Scannen realisiert wird.

3. Dreidimensionales Scan-Verfahren, das eine Mehrzahl von Laser-Projektoren mit Laserstrahlen unterschiedlicher Wellenlängen (1, 2) aufweist, gemäß Anspruch 1, wobei das Verfahren des Weiteren aufweist:
direktes Erfassen der Information über die Änderung der relativen Position zwischen dem Scanner und dem gescannten Objekt unter Verwendung einer Pipeline oder eines Linearschiebers mit einem Positionssignal oder einer rotierenden Plattform mit einem Winkelsignal;
Spleißen von dreidimensionalen Konturlinienpunktwolkendaten, die aus aufeinanderfolgenden Frames des Scanners in einem Koordinatensystem erhalten wurden, unter Verwendung der Änderungsinformation der Position zwischen dem vorhergehenden Frame und dem darauffolgenden Frame, die von den Kameras aufgenommen wurden;
Erhalten vollständiger dreidimensionaler Konturpunktwolkendaten der Oberfläche des gescannten Objekts, wodurch ein kontinuierliches Scannen realisiert wird.

4. Dreidimensionales Scan-Verfahren, das eine Mehrzahl von Laser-Projektoren mit Lasern unterschiedlicher Wellenlängen aufweist, gemäß Anspruch 1, wobei in Schritt 1) das Kalibierverfahren ein Zhengyou-Zhang-Kalibrierverfahren ist, um Brennweiten, Mittenversatz und Koeffizienten der radialen Verzeichnung und tangentialen Verzeichnung der Kameras zu erfassen.

5. Dreidimensionales Scan-Verfahren, das eine Mehrzahl von Laser-Projektoren mit Lasern unterschiedlicher Wellenlängen aufweist, gemäß Anspruch 1, wobei in Schritt 2) das Kalibierverfahren ein Stereo-Kalibrierverfahren ist.

6. Scanner zur Implementierung des dreidimensionales Scan-Verfahren, das eine Mehrzahl von Laser-Projektoren mit Lasern unterschiedlicher Wellenlängen aufweist, gemäß Anspruch 1, wobei
der Scanner wenigstens zwei Laser-Projektoren (P1, P2), wenigstens zwei Kameras (C1, C2) zur Aufnahme von auf die Oberfläche des gescannten Objekts projizierten Lasermustern und eine mit den Kameras verbundene Datenverarbeitungseinheit zur Bilderkennung und dreidimensionalen Rekonstruktion aufweist;
die wenigstens zwei Laser-Projektoren den wenigstens zwei unterschiedlichen Wellenlängen (1, 2) entsprechen und an festen Positionen angeordnet sind;
eine räumliche Lagebeziehung zwischen den zwei Kameras kalibriert und bekannt ist;
Ausgabe-Enden der wenigstens zwei Kameras mit der Datenverarbeitungseinheit verbunden sind;
die Datenverarbeitungseinheit einen 2D-Bildlaser-Konturlinienextraktor, einen 3D-Konstruktor und ein Wellenbereichsumschaltungs-Erfassungsmittel aufweist, das die kalibrierten internen Parameter und Verzeichnungskoeffizienten der wenigstens zwei Kameras bei den Wellenlängen (1 oder 2), ausgewählt aus der einen der mindestens zwei verschiedenen Wellenlängen, auswählt;
die Ausgabe-Enden der wenigstens zwei Kameras mit dem 2D-Bildlaser-Konturlinienextraktor verbunden sind, der 2D-Bildlaser-Konturlinienextraktor mit dem 3D-Konstruktor verbunden ist, das Wellenbereichsumschaltungs-Erfassungsmittel mit dem 2D-Bildlaser-Konturlinienextraktor und dem 3D-Konstruktor verbunden ist;
und wobei der Scanner eine Synchron-Trigger-Einheit aufweist zum selektiven Auslösen eines oder mehrerer Laser-Projektoren gleicher Wellenlänge zum Synchronbetrieb mit den Kameras, wobei die Trigger-Enden der Laser-Projektoren und der Kameras mit der Synchron-Trigger-Einheit verbunden sind.

7. Scanner gemäß Anspruch 6, wobei
Multi-Bandpass-Filter an den Kameras angebracht sind und Durchlassbereiche der Filter den wenigstens zwei Wellenlängen der wenigstens zwei Laser-Projektoren entsprechen.

8. Scanner gemäß Anspruch 6, wobei
die wenigstens zwei Laser-Projektoren unterschiedlicher Wellenlängen einen Projektor des blauen Wellenbereichs und einen Laser-Projektor des roten Wellenbereichs aufweisen.

## Revendications

1. Procédé de balayage tridimensionnel comprenant une pluralité de projecteurs laser avec des lasers de différentes longueurs d'onde (1, 2),
dans lequel un scanner mettant en œuvre le procédé de balayage tridimensionnel comprend au moins deux caméras fixes (C1, C2) et au moins deux projecteurs laser (P1, P2),
les au moins deux projecteurs laser correspondant à au moins deux longueurs d'onde différentes (1, 2),
une relation de position spatiale entre les deux caméras étant étalonnée et connue, les extrémités de déclenchement des projecteurs laser et les caméras étant connectées à une unité de déclenchement synchrone pour déclencher de manière sélective un ou plusieurs projecteurs laser de la même longueur d'onde pour fonctionner en synchronisation avec les caméras, le procédé de balayage tridimensionnel comprenant :
l'identification et l'obtention des ensembles de lignes bidimensionnelles au niveau de centres en surbrillance selon des modèles 2D de lignes de contour laser projetées sur une surface d'un objet balayé capturé par les deux caméras, respectivement ;
la génération, selon la triangulation et la contrainte épipolaire, de données de nuage de points spatiaux tridimensionnels,
le procédé de balayage tridimensionnel comprenant en outre les étapes suivantes :
1) l'étalonnage à l'avance des paramètres internes des caméras et des coefficients de distorsion des au moins deux caméras à différentes longueurs d'onde (1,2), respectivement ;
2) l'étalonnage respectif à l'avance d'une relation de position entre les deux caméras ;
3) avant le balayage,
la sélection d'un projecteur laser d'une gamme d'ondes correspondante pour le balayage en fonction des exigences de précision du champ et des dimensions du plan de balayage ;
la sélection, selon des configurations, des paramètres internes étalonnés et des coefficients de distorsion des au moins deux caméras à la longueur d'onde correspondante (1, 2) ; et
l'émission, vers un extracteur de lignes de contour laser d'image 2D et vers un constructeur 3D, des paramètres internes et des coefficients de distorsion sélectionnés des au moins deux caméras ;
4) lors du balayage,
l'entrée synchrone, par les au moins deux caméras, dans l'extracteur de contour laser d'image 2D, des images de contour laser capturées de la surface de l'objet ;
la correction respective, en fonction des paramètres internes sélectionnés et des coefficients de distorsion des au moins deux caméras à la gamme d'ondes actuelle, de la distorsion des deux images ;
l'extraction respective de régions connectées de contours de lignes à partir des images corrigées en fonction des différences de niveau de gris entre les pixels ;
le calcul pour obtenir respectivement les ensembles de lignes 2D aux centres en surbrillance au niveau du sous-pixel selon les centres de gravité en niveau de gris dans les régions connectées ;
l'émission des ensembles de lignes 2D vers le constructeur 3D ;
l'obtention, par le constructeur 3D, des données de nuage de points de contour 3D sur la base des principes de contrainte épipolaire selon les paramètres internes, les coefficients de distorsion et la relation de position sélectionnés des deux caméras à la longueur d'onde actuelle (1, 2); et
l'émission de données de nuage de points de contour 3D.

2. Procédé de balayage tridimensionnel comprenant une pluralité de projecteurs laser avec des lasers de différentes longueurs d'onde selon la revendication 1, dans lequel le procédé comprend en outre :
l'identification, par les deux caméras, de points caractéristiques intrinsèques sur la surface de l'objet balayé dans un champ de vision lors de la capture des caractéristiques de contour laser de la surface de l'objet balayé, de manière à obtenir des informations de changement de position relative ;
l'épissage, en utilisant les informations de changement de position relative entre une image précédente et une image suivante, des données de nuage de points de ligne de contour tridimensionnel obtenues à partir d'images consécutives du scanner dans un système de coordonnées ;
l'obtention de données complètes de nuage de points de contour tridimensionnel de la surface de l'objet balayé, réalisant ainsi un balayage continu.

3. Procédé de balayage tridimensionnel comprenant une pluralité de projecteurs laser avec des lasers de différentes longueurs d'onde selon la revendication 1, dans lequel le procédé comprend en outre :
l'obtention directe, à l'aide d'un pipeline ou d'un curseur linéaire avec un signal de position, ou une plate-forme rotative avec un signal d'angle, des informations de changement de position relative entre le scanner et l'objet balayé ;
l'épissage, en utilisant les informations de changement de position entre l'image précédente et l'image suivante capturées par les caméras, des données de nuage de points de ligne de contour tridimensionnel obtenues à partir des images consécutives du scanner dans un système de coordonnées ;
l'obtention de données complètes de nuage de points de contour tridimensionnel de la surface de l'objet balayé, réalisant ainsi un balayage continu.

4. Procédé de balayage tridimensionnel comprenant une pluralité de projecteurs laser avec des lasers de différentes longueurs d'onde selon la revendication 1, dans lequel à l'étape 1), le procédé d'étalonnage des caméras est le procédé d'étalonnage de Zhengyou Zhang pour obtenir des longueurs focales, des décalages centraux et des coefficients de distorsion radiale et de distorsion tangentielle des caméras.

5. Procédé de balayage tridimensionnel comprenant une pluralité de projecteurs laser avec des lasers de différentes longueurs d'onde selon la revendication 1, dans lequel à l'étape 2), le procédé d'étalonnage est le procédé d'étalonnage stéréoscopique.

6. Scanner pour la mise en œuvre du procédé de balayage tridimensionnel comprenant une pluralité de projecteurs laser avec des lasers de différentes longueurs d'ondes selon la revendication 1, dans lequel
le scanner comprend au moins deux projecteurs laser (P1, P2), au moins deux caméras (C1, C2) pour la capture des motifs laser projetés sur une surface d'un objet balayé, et une unité de traitement informatique connectée aux caméras pour la reconnaissance d'images et la reconstruction tridimensionnelle ;
les au moins deux projecteurs laser correspondent à au moins deux longueurs d'onde différentes (1, 2) et ont des positions fixes ;
une relation de position spatiale entre les deux caméras est étalonnée et connue ; les extrémités de sortie des au moins deux caméras sont connectées à l'unité de traitement informatique ;
l'unité de traitement informatique comprend un extracteur de ligne de contour laser d'image 2D, un constructeur 3D, et un dispositif de détermination de commutation de gamme d'ondes qui sélectionne les paramètres internes étalonnés et les coefficients de distorsion des au moins deux caméras à la longueur d'onde (1 ou 2) sélectionnée parmi l'une des au moins deux longueurs d'onde différentes ;
les extrémités de sortie des au moins deux caméras sont connectées à l'extracteur de lignes de contour laser d'image 2D, l'extracteur de lignes de contour laser d'image 2D est connecté au constructeur 3D, le dispositif de détermination de commutation de gamme d'ondes est connecté à l'extracteur de lignes de contour laser d'image 2D et au constructeur 3D ;
et dans lequel le scanner comprend une unité de déclenchement synchrone configurée pour déclencher sélectivement un ou plusieurs projecteurs laser de la même longueur d'onde pour fonctionner en synchronisation avec les caméras, dans lequel les extrémités de déclenchement des projecteurs laser et des caméras sont connectées audit déclencheur synchrone.

7. Scanner selon la revendication 6, dans lequel
des filtres de bande passante multiples sont montés sur les caméras, et les bandes passantes des filtres correspondent aux au moins deux longueurs d'onde des au moins deux projecteurs laser.

8. Scanner selon la revendication 6, dans lequel
les au moins deux projecteurs laser de longueurs d'onde différentes comprennent un projecteur laser d'une gamme d'ondes bleue et un projecteur laser d'une gamme d'ondes rouge.
